# FASCICULE DE BREVET EUROPEEN

(11) **EP 0 459 920 B1**
(45) Date de publication et mention de la délivrance du brevet: **19.07.1995**
(21) Numéro de dépôt: 91420167.8
(22) Date de dépôt: 27.05.1991
(51) Int. Cl.: G01N 29/04

(54) **Procédé de détection de défauts sur des tubes métalliques à nervures hélicoidales internes**
Verfahren zur Feststellung von Fehlern auf Metallrohren mit schraubenlinienförmig verlaufenden Innenrippen
Method of detecting defaults on metal tubes with internal helical ribs

(30) Priorité: 28.05.1990 FR 9006825
(43) Date de publication de la demande: 04.12.1991
(73) Titulaire: VALTUBES, F-92100 Boulogne-Billancourt (FR)
(72) Inventeur: Ngo, Phu-Ann, F-59620 Aulnoye (FR); Tailleux, Olivier, F-59620 Aulnoye (FR); Wiart, Hervé, F-62860 Bourlon (FR)
(74) Mandataire: Desolneux, Jean-Paul Charles

(56) Documents cités:
- EP-A- 0 102 176
- EP-A- 0 294 255
- FR-A- 2 195 351
- FR-A- 2 361 649
- PATENT ABSTRACTS OF JAPAN, vol. 8, no. 1 (P-246)[1438], 6 janvier 1984 ; & JP-A-58 165 073

## Description

Le procédé qui fait l'objet de l'invention concerne la détection, la localisation et l'évaluation des défauts existant sur les parois de tubes métalliques à nervures hélicoïdales internes.

Ce procédé concerne en particulier les défauts présentés par des tubes utilisés principalement pour la réalisation d'échangeurs de chaleur pour centrales thermiques. Suivant les conditions d'utilisation de tels tubes peuvent être réalisés en des aciers non alliés, inoxydables ou réfractaires ou encore en d'autres métaux ou alliages.

De façon connue, des contrôles systématiques par ultrasons sont effectués sur ces tubes pour s'assurer que des fissures éventuelles longitudinales ou transversales formées sur les parois externes ou internes n'atteignent pas une profondeur susceptible d'entraîner leur rupture ultérieure.

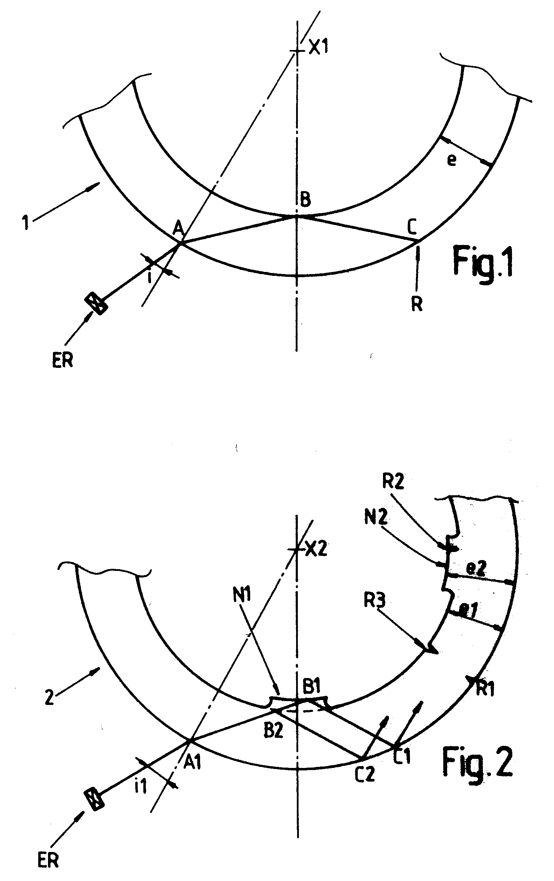

On détecte de façon courante, sur de tels tubes, l'existence de telles fissures au moyen d'ultrasons. La figure 1 montre, suivant l'état de la technique, comment on effectue sur un tube métallique 1 dépourvu de nervures la recherche de défauts sur la paroi externe. Un transducteur émetteur-récepteur à ultrasons émet un faisceau ultrasonore d'axe incliné, d'un angle "i" par rapport au rayon du tube d'axe X1 dans le plan de coupe de la figure. Le tube est animé par rapport au transducteur ER d'un mouvement relatif de rotation autour de son axe tout en glissant le long de cet axe. On voit qu'une fissure longitudinale externe R est détectée par un faisceau d'ultrasons issu du transducteur ER qui effectue le parcours ABC dans la paroi du tube avec réflexion totale en B, une partie du faisceau étant renvoyée au transducteur par le défaut R suivant le parcours CBA.

Grâce à des moyens électroniques connus l'amplitude du signal correspondant au défaut R peut être déterminée et comparée à l'amplitude d'un défaut étalon conservée en mémoire. Il est alors possible d'éliminer les tubes dont les fissures, détectées par ultrasons, donnent des signaux d'amplitude égale ou supérieure à un seuil correspondant à l'amplitude du signal donné par le défaut étalon.

Les essais effectués pour appliquer à des tubes nervurés intérieurement la même méthode de détection et de contrôle par ultrasons des fissures externes ou internes ont montré que l'existence des nervures entraînait des variations très importantes de l'amplitude des signaux de défauts reçus par le transducteur. Il en résultait qu'on ne pouvait pas comparer avec sûreté cette amplitude à un seuil déterminé. Il était alors nécessaire de prendre une marge de sécurité très importante en prenant le risque de rejeter des tubes de bonne qualité ou bien au contraire de réduire la marge de sécurité et de prendre le risque d'accepter des tubes non conformes aux normes ou spécifications.

Parmi les documents concernant la détection par ultrasons de défauts dans des produits métalliques, on peut citer comme faisant partie de l'état de la technique :

Le document intitulé : Ultrasonic testing of Materials : Josef et Herbert Krautkrämer, 3ème édition - Springer Verlay 1983 décrit des modes de détection de défauts sur les parois internes et externes de tubes métalliques. On voit, par exemple page 442, figure 24.3a, un mode de détection d'une fissure externe longitudinale sur un tube par deux sondes ultrasonores disposées dos à dos à l'extérieur du tube, transversalement et émettant des faisceaux ultrasonores dans des directions annulaires opposées. On peut obtenir ainsi d'une part un signal écho résultant de la rencontre des deux faisceaux et jouant le rôle d'étalon et d'autre part un signal de défaut. Dans le cas de tubes à nervures externes, on peut faire circuler la sonde à l'intérieur et dévier le faisceau d'ultrasons par un miroir (figures 24. 21) ; selon les auteurs, la détection des défauts en présence de nervures reste difficile. Le cas de nervures internes hélicoïdales n'est pas traité.

Le brevet EP 0 294 955 décrit une méthode de détection de défauts dans des soudures annulaires réalisées entre un tube mince et un bouchon, tous deux d'un même métal. La méthode employée ne concerne pas la détection de défauts individualisés mais la détection d'un ensemble de très petits défauts tels que des porosités multiples formées dans la zone de soudage. On utilise une sonde qui envoie un faisceau d'ultrasons orientés en direction de la zone de soudage et on déplace cette sonde pour balayer systématiquement cette zone annulaire. On recueille point par point des échos dont on enregistre seulement les amplitudes dépassant un seuil donné. On trace les contours des zones contenant de tels ensembles de points. Chaque zone comportant un contour fermé constitue un objet dont on étudie les caractères tels que l'amplitude moyenne des échos correspondant à chaque point. On compare ensuite ces caractères avec ceux d'objets analogues mis en mémoire. Ce document ne décrit pas plus que le document Krautkrämer la recherche de fissures sur des tubes nervurés et ne propose pas de méthode permettant d'identifier des défauts individuels tels que des fissures.

Le brevet japonais 58-165 073 décrit un dispositif particulier de correction d'amplitude d'un signal ultra-sons en fonction de la distance parcourue.

On a recherché la possibilité de mettre au point une méthode de détection et de contrôle par ultrasons des défauts des tubes métalliques à nervures internes, permettant de tenir compte des variations d'amplitude observées au cours de la détection d'un même défaut, de façon à pouvoir comparer ce défaut à un étalon en mettant en oeuvre de façon automatique des moyens de traitement électroniques des signaux.

Le procédé qui fait l'objet de l'invention permet de résoudre ce problème.

Ce procédé permet de détecter des défauts présents sur les parois externes ou internes d'un tube métallique à paroi externe de révolution comportant des nervures hélicoïdales internes ceci que les défauts présents soient longitudinaux ou transversaux. Dans ce procédé on met en oeuvre des moyens de détection par ultrasons comportant au moins un émetteur-récepteur qui émet un faisceau d'ultrasons qui pénètre dans la paroi du tube ; le faisceau est orienté dans un plan perpendiculaire à l'axe de défilement du tube avec un angle d'incidence permettant d'obtenir une bonne sensibilité de détection. Tout signal correspondant à l'interception d'une fraction d'un défaut est reçu par le récepteur et traité par des moyens électroniques automatiques en vue de comparer son amplitude à un seuil d'amplitude correspondant à un défaut étalon. Suivant l'invention, les moyens électroniques de traitement automatique déterminent au préalable la longueur du parcours aller-retour effectué par le faisceau d'ultrasons correspondant à chaque signal de défaut au sein de la paroi du tube et apportent un correctif à l'amplitude du signal ou à celle du seuil avant comparaison ; ce correctif dépend de la différence qui existe entre la longueur du parcours effectivement réalisé par le signal et celle du parcours du signal pour lequel l'amplitude du seuil a été déterminée ; si la différence entre les deux longueurs de parcours est nulle ce correctif est nul également. La comparaison est ensuite effectuée de façon connue.

Le tube est animé par rapport à l'émetteur-récepteur d'un mouvement relatif de rotation autour de son axe ainsi que d'un mouvement d'avance le long de cet axe.

Suivant un premier mode particulier de réalisation du procédé suivant l'invention, les moyens électroniques de traitement automatique des signaux déterminent pour chaque signal reçu le parcours, que celui-ci a effectivement réalisé parmi les parcours possibles, au moyen d'une mesure de la longueur de ce parcours et effectuent une correction d'amplitude correspondant au parcours réalisé afin de faire correspondre cette amplitude du signal à celle qu'il aurait eue s'il avait effectué le parcours pour lequel l'amplitude du seuil de comparaison a été prévue.

Suivant un deuxième mode particulier de réalisation du procédé suivant l'invention, les moyens électroniques de traitement automatique des signaux, après avoir déterminé pour chaque signal reçu le parcours que celui-ci a effectivement réalisé, au moyen d'une mesure de la longueur de ce parcours, effectuent une comparaison de l'amplitude de ce signal avec un seuil dont l'amplitude a été ajustée pour tenir compte de la longueur du parcours effectivement réalisé par ce signal.

De façon avantageuse lorsqu'on utilise des seuils de comparaison dont l'amplitude est ajustée pour chaque longueur de parcours susceptible d'être effectuée par chaque signal on met en mémoire cet ensemble de valeurs d'amplitude de seuils pour les utiliser dans le traitement des signaux.

De très nombreuses variantes ou modifications peuvent être apportées au procédé qui fait l'objet de l'invention sans sortir du domaine de celle-ci.

Les figures et l'exemple ci-après décrivent, un mode particulier de réalisation du procédé suivant l'invention.

La figure 1 représente une section transversale d'un tube de révolution sans nervures qui montre les conditions de détection de fissures sur les parois interne ou externe de ce tube par ultrasons.

La figure 2 représente une section transversale d'un tube de révolution, nervuré sur la paroi interne qui montre les différents parcours possibles du faisceau d'ultrasons dûs à la présence des nervures.

La figure 3 est un schéma d'un mode de mise en oeuvre du procédé automatique suivant l'invention d'évaluation de défauts détectés par ultrasons.

La figure 1 montre, comme cela a été dit plus haut dans l'exposé de l'état de la technique, les conditions d'utilisation d'un transducteur émetteur-récepteur ER à ultra-sons pour la détection de défauts tels que des fissures longitudinales sur la paroi externe ou interne d'un tube métallique.

On constate dans le cas de la Figure 1 que si la position de la sonde ER est fixe, le tube 1 d'épaisseur "e" tournant autour de son axe X1, à faible vitesse, tout en coulissant le long de cet axe, à faible vitesse également, un seul parcoure ABC à l'intérieur de la paroi du tube 1 est possible pour le faisceau d'ultrasons pour atteindre une fissure longitudinale telle que R. De façon connue une fraction du faisceau est interceptée par cette fissure et rejoint le transducteur ER après un trajet en retour identique au trajet aller. La vitesse de rotation du tube est suffisamment faible pour que tout se passe comme si celui-ci était immobile. On comprend que la détection de fissures sur la paroi interne du tube 1 peut être effectuée en direct au moyen d'un faisceau d'ultrasons qui effectue le parcours aller et retour AB.

Dans le cas de la Figure 2 le tube 2 comporte des nervures telles que N1, N2. L'épaisseur "e2" au droit des nervures est nettement supérieure, à l'épaisseur "e1" entre deux nervures. On voit que la détection d'une fissure longitudinale externe R1 peut être effectuée soit en suivant le trajet A1 B1 C1, avec réflexion du faisceau d'ultrasons au sommet de la nervure N1, soit en suivant le trajet A1 B2 C2 nettement plus court avec réflexion sur la paroi interne entre deux nervures. Il convient de noter en effet que la fissure R1 étant longitudinale et donc parallèle aux génératrices elle viendra en position C1 ou C2 en faisant coulisser le tube le long de son axe X2, les nervures telles que N1, N2, étant hélicoïdales. Pour les mêmes raisons les fissures longitudinales R2, R3, formées sur la paroi interne du tube, peuvent se trouver entre les nervures, ou sur une d'entre elles, ou bien, si elles sont suffisamment longues, à cheval sur des nervures.

Conformément au procédé suivant l'invention, les signaux d'ultrasons correspondant à des défauts tels que R1, R2, R3 sont traités par des moyens électroniques automatiques, non représentés auxquels est relié le transducteur ER pour déterminer dans une première phase pour chaque signal reçu la longueur du parcours aller-retour effectué par le faisceau d'ultrasons. Une comparaison de ces longueurs de parcours avec les longueurs réelles des parcours possibles qui sont les quatre parcours aller-retour A1 B1 C1, A1 B2 C2, A1 B1 et A1 B2, indiqués figure 2, permet de classer ces signaux chacun dans une catégorie correspondant à l'un de ces parcours. Il est alors possible de comparer chaque signal à un seuil de référence correspondant à un défaut étalon, en ajustant l'amplitude du signal ou bien la hauteur du seuil, afin de tenir compte de la longueur du parcours réellement effectué par le faisceau d'ultrasons associé à ce signal.

Une telle comparaison permet alors de constater, indépendamment du chemin parcouru par le faisceau d'ultrasons générateur du signal, si le défaut détecté est plus important ou non que le défaut étalon auquel correspond le seuil de comparaison.

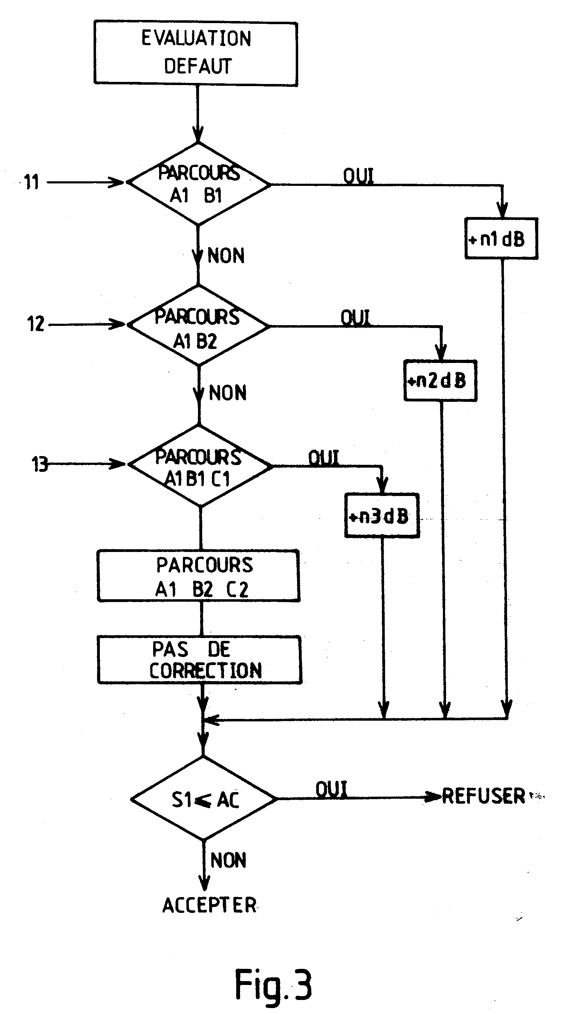

La figure 3 est un schéma qui montre le déroulement logique des opérations automatiques d'évaluation des défauts par le procédé suivant l'invention en utilisant des moyens électroniques de traitement connus en eux-mêmes. On voit que la longueur de parcours du signal est comparée en 11 au parcours A1 B1. S'il y a égalité une addition de n1 dB est effectuée à l'amplitude du signal, avant comparaison de cette amplitude corrigée AC avec l'amplitude du seuil S1 d'acceptation ou de refus. Si la longueur de parcours du signal n'est pas A1 B1 il y a à nouveau comparaison en 12 avec A1 B2 et éventuellement en 13 avec A1 B1 C1. Les additions correctives n2 dB et n3dB sont respectivement ajoutées.

Si le parcours du signal est A1 B2 C2 à condition que l'amplitude de seuil soit déterminée pour un défaut étalon dont l'amplitude du signal est elle-même ajustée pour correspondre à un tel parcours, aucune addition n'est à effectuer.

Les différents correctifs d'amplitude des signaux d'ultrasons tels que n1dB, n2dB, n3dB sont déterminés, de préférence, par comparaison des amplitudes des signaux d'ultrasons obtenus suivant les différents parcours possibles du faisceau d'ultrasons à travers la paroi du tube.

En appliquant ainsi le procédé suivant l'invention, il est possible de comparer de façon sûre les défauts des tubes à un seuil et donc de rejeter les tubes dont les défauts dépassent le seuil, sans risque de rejeter des tubes acceptables.

Réciproquement on ne risque pas d'accepter des tubes présentant des fissures d'amplitude supérieure aux fissures étalon.

## Revendications

1. Procédé de détection de défauts sur les parois externes ou internes d'un tube métallique (2) à paroi externe de révolution comportant des nervures hélicoïdales internes (N1, N2), dans lequel on met en oeuvre des moyens de détection par ultrasons comportant au moins un émetteur-récepteur (ER) qui émet un faisceau d'ultrasons qui pénètre dans la paroi du tube et qui, lorsqu'une fraction de ce faisceau est réfléchie par un défaut (R1, R2, R3) reçoit un signal correspondant à celui-ci, et comportant également des moyens de traitement électronique de ces signaux permettant de comparer leur amplitude, de façon automatique, à un seuil (S1) correspondant à un défaut étalon caractérisé en ce que, le signal reçu pouvant avoir effectué dans la paroi du tube des parcours (A1B1, A1B2, A1B1C1, A1B2C2) aller et retour de longueurs différentes, les moyens électroniques de traitement déterminent la longueur du parcours aller-retour effectué par le faisceau d'ultrusons correspondant à chaque signal et apportent un correctif à l'amplitude du signal ou du seuil avant comparaison, correctif qui dépend de la différence existant entre le parcours du signal effectivement réalisé et le parcours de ce signal pour lequel l'amplitude du seuil (S1) a été déterminée.

2. Procédé suivant revendication 1 caractérisé en ce que les moyens électroniques de traitement déterminent pour chaque signal reçu la longueur du parcours (A1B1, A1B2, A1B1C1, A1B2C2) aller et retour que celui-ci a effectivement réalisé parmi les parcours possibles et effectuent une correction d'amplitude (n1dB, n2dB, n3dB) correspondant au parcours réalisé de façon à faire correspondre l'amplitude (AC) du signal à celle qu'il aurait eu s'il avait effectué le parcours pour lequel l'amplitude (S1) du seuil de comparaison a été prévue.

3. Procédé suivant revendication 1 caractérisé en ce que les moyens électroniques de traitement déterminent pour chaque signal reçu la longueur du parcours (A1B1, A1B2, A1B1C1, A1B2C2) aller et retour que celui-ci a effectivement réalisé et effectuent une comparaison de l'amplitude de ce signal avec un seuil dont l'amplitude a été ajustée pour tenir compte de la longueur du parcours effectivement réalisé par ce signal.

4. Procédé suivant revendication 3 caractérisé en ce que les moyens électroniques de traitement comportent en mémoire des seuils de comparaison dont l'amplitude a été ajustée pour chaque longueur de parcours (A1B1, A1B2, A1B1C1, A1B2C2) aller et retour susceptible d'être effectué par chaque signal afin de comparer l'amplitude de chaque signal avec le seuil de comparaison correspondant à la longueur du parcours de ce signal.

5. Procédé suivant l'une des revendications 1 à 4 caractérisé en ce que le tube (2) est animé par rapport à l'émetteur-récepteur (ER) d'un mouvement relatif de rotation autour de son axe (X2) ainsi que d'un mouvement d'avance le long de cet axe.

6. Procédé suivant l'une des revendications 1 à 5 caractérisé et ce que les défauts à détecter sont des défauts longitudinaux ou transversaux.

## Patentansprüche

1. Verfahren zur Feststellung von Fehlern an den Außen- oder Innenwänden eines Metallrohrs (2) mit einer Drehaußenwand, umfassend spiralförmig verlaufende Innenrippen (N1, N2), bei dem Ultraschallerfassungsvorrichtungen mit mindestens einem Sendeempfänger (ER) eingesetzt werden, der einen Ultraschallstrahl aussendet, der in die Rohrwand eindringt, und der, wenn ein Teil dieses Strahls von einem Fehler (R1, R2, R3) reflektiert wird, ein diesem entsprechendes Signal empfängt, und umfassend außerdem Vorrichtungen zur elektronischen Verarbeitung dieser Signale, die es ermöglichen, ihre Amplitude automatisch mit einem Schwellenwert (S1) zu vergleichen, der einem Vergleichsfehler entspricht, dadurch gekennzeichnet, daß, nachdem das empfangene Signal in der Rohrwand Hin- und Rückwege (A1B1, A1B2, A1B1C1, A1B2C2) unterschiedlicher Länge zurückgelegt haben kann, die elektronischen Verarbeitungsvorrichtungen die Länge des jedem Signal entsprechenden, von dem Strahl zurückgelegten Hin- und Rückwegs bestimmen und eine Korrektur der Amplitude des Signals oder des Schwellenwerts vor dem Vergleich vornehmen, eine Korrektur, die von dem Unterschied zwischen dem von dem Signal tatsächlich zurückgelegten Weg und dem Weg dieses Signals, für den die Amplitude des Schwellenwerts (S1) bestimmt wurde, abhängt.

2. Verfahren nach Anspruch 1, dadurch gekennzeichnet, daß die elektronischen Bearbeitungsvorrichtungen für jedes empfangene Signal die Länge des Hin- und Rückwegs (A1B1, A1B2, A1B1C1, A1B2C2) bestimmen, den dieses von den möglichen Wegen tatsächlich zurückgelegt hat, und eine Amplitudenkorrektur vornehmen (n1dB, n2dB, n3dB), die dem zurückgelegten Weg entspricht, um die Amplitude (AC) des Signals derjenigen anzugleichen, die es gehabt hätte, wenn es den Weg zurückgelegt hätte, für den die Amplitude (S1) des Vergleichsschwellenwerts vorgesehen war.

3. Verfahren nach Anspruch 1, dadurch gekennzeichnet, daß die elektronischen Verarbeitungsvorrichtungen für jedes empfangene Signal die Länge des Hin- und Rückwegs (A1B1, A1B2, A1B1C1, A1B2C2) festlegen, den dieses tatsächlich zurückgelegt hat, und einen Vergleich der Amplitude dieses Signals mit einem Schwellenwert vornehmen, dessen Amplitude angeglichen wurde, um der Länge des tatsächlich von diesem Signal zurückgelegten Wegs Rechnung zu tragen.

4. Verfahren nach Anspruch 3, dadurch gekennzeichnet, daß die elektronischen Verarbeitungsvorrichtungen gespeichert Vergleichsschwellenwerte aufweisen, deren Amplitude für jede Hin- und Rückweglänge (A1B1, A1B2, A1B1C1, A1B2C2) angeglichen wurde, die von jedem Signal zurückgelegt werden kann, um die Amplitude jedes Signals mit dem Vergleichsschwellenwert zu vergleichen, welcher der Weglänge dieses Signals entspricht.

5. Verfahren nach einem der Ansprüche 1 bis 4, dadurch gekennzeichnet, daß das Rohr (2) bezüglich dem Sendeempfänger (ER) eine relative Drehbewegung um seine Achse (X2) sowie eine Vorwärtsbewegung entlang dieser Achse macht.

6. Verfahren nach einem der Ansprüche 1 bis 5, dadurch gekennzeichnet, daß die aufzuspürenden Fehler solche in Längs- oder Querrichtung sind.

## Claims

1. A method of detecting faults on the external or internal walls of a metal tube (2) having an external wall of revolution and comprising internal helical ribs (N1, N2) in which ultrasonic detection means are used which comprise at least one emitter-receiver (ER) which emits an ultrasonic beam which penetrates the wall of the tube and which, when a fraction of this beam is reflected by a fault (R1, R2, R3), receives a signal corresponding to the fault, and likewise comprising electronic means of processing these signals, making it possible automatically to compare their amplitude with a threshold (S1) corresponding to a standard fault, characterised in that since the signal receiced may have travelled different distances (A1B1, A1B2, A1B1C1, AlB2C2) in the wall of the tube, the electronic processing means determine the length of to-and-fro travel completed by the ultrasonic beam corresponding to each signal and apply a correction to the amplitude of the signal or of the threshold prior to comparison, a correction which depends on the difference existing between the distance actually travelled by the signal and the distance travelled by this signal for which the threshold amplitude (S1) has been determined.

2. A method according to claim 1, characterised in that the electronic processing means determine for each signal received the length (A1B1, A1B2, A1B1C1, A1B2C2) of travel which the signal has actually completed from among the possible distances, and apply an amplitude correction (n1dB, n2dB, n3dB) corresponding to the distance travelled so that the amplitude (AC) of the signal is made to correspond to that which it would have been had it completed the distance for which the comparison threshold amplitude (S1) had been intended.

3. A method according to claim 1, characterised in that the electronic processing means determine for each signal received the length of travel (A1B1, A1B2, A1B1C1, A1B2C2) which this latter has actually completed and apply a comparison of the amplitude of this signal with a threshold the amplitude of which has been adjusted to take into account the length of travel actually completed by this signal.

4. A method according to claim 3, characterised in that the electronic processing means carry in a memory comparison thresholds the amplitude of which has been adjusted for each length of travel (A1B1, A1B2, A1B1C1, A1B2C2) likely to be completed by each signal in order to compare the amplitude of each signal with the comparison threshold corresponding to the length of travel of this signal.

5. A method according to one of claims 1 to 4, characterised in that the tube (2) is propelled in relation to the emitter-receiver (ER) to perform a relative movement of rotation about its axis (X2) and also performs a movement in which it advances along this axis.

6. A method according to one of claims 1 to 5, characterised in that the faults to be detected are longitudinal or transverse faults.
